# EUROPÄISCHE PATENTANMELDUNG

(11) **EP 3 511 441 A1**
(43) Veröffentlichungstag der Anmeldung: **17.07.2019**
(21) Anmeldenummer: 18020116.2
(22) Anmeldetag: 27.03.2018
(51) Int. Cl.: C25B 1/00, C25B 1/10, C25B 9/08, C25B 15/08, B01D 53/00, C01B 3/12, C01B 32/40

(54) **HERSTELLUNG EINES KOHLENMONOXID ENTHALTENDEN GASPRODUKTS**

(30) Priorität: 12.01.2018 DE 102018000214
(71) Anmelder: Linde Aktiengesellschaft, 80331 München (DE)
(72) Erfinder: Peschel, Andreas, 82515 Wolfratshausen (DE); Hentschel, Benjamin, 80689 München (DE)
(74) Vertreter: Fischer, Werner

(57) **Zusammenfassung**

Die Erfindung betrifft ein Verfahren (100) zur Herstellung eines zumindest Kohlenmonoxid enthaltenden Gasprodukts (S), bei dem ein zumindest Kohlendioxid, Wasser und Wasserstoff enthaltender Elektrolyseeinsatz gebildet und einer Kathodenseite (12) einer Hochtemperatur-Elektrolysezelle (10) zugeführt wird, und bei dem von der Kathodenseite (12) der Hochtemperatur-Elektrolysezelle (10) ein zumindest Wasser, Kohlendioxid, Kohlenmonoxid und Wasserstoff enthaltendes Elektrolyserohprodukt abgeführt wird, dadurch gekennzeichnet, dass zumindest einem Teil des Elektrolyserohprodukts oder aus einem unter Verwendung zumindest eines Teils des Elektrolyserohprodukts gebildeten Gasgemisch eine zumindest Kohlenmonoxid enthaltende Fraktion abgetrennt wird, wobei das in der zumindest Kohlenmonoxid enthaltenden Fraktion enthaltene Kohlenmonoxid zumindest teilweise mit Wasser unter Bildung von Wasserstoff einer Wassergas-Shift-Reaktion unterworfen wird, und wobei zumindest ein Teil des in der Wassergas-Shift-Reaktion gebildeten Wasserstoffs bei bei der Bildung des Elektrolyseeinsatzes verwendet wird. Eine entsprechende Anlage ist ebenfalls Gegenstand der vorliegenden Erfindung

## Beschreibung

Die vorliegende Erfindung betrifft ein Verfahren zur Herstellung eines zumindest Kohlenmonoxid enthaltenden Gasprodukts und eine entsprechende Anlage gemäß den jeweiligen Oberbegriffen der unabhängigen Patentansprüche.

### Stand der Technik

Synthesegas ist ein überwiegend oder ausschließlich Kohlenmonoxid und Wasserstoff enthaltendes Gasgemisch. Synthesegas wird derzeit mittels unterschiedlicher Verfahren hergestellt, z.B. durch Dampfreformierung von Erdgas oder durch Vergasung von Einsatzstoffen wie Kohle, Erdöl oder Erdgas und eine sich jeweils anschließende Aufreinigung.

Wasserstoff kann auch mittels Wasserelektrolyse (beispielsweise mittels alkalischer Elektrolyse oder unter Einsatz einer Protonenaustauschmembran) hergestellt werden. Die Herstellung von Kohlenmonoxid ist mittels Hochtemperaturelektrolyse von Kohlendioxid möglich, wie beispielsweise in der WO 2013/131778 A2 offenbart. Durch Mischung entsprechend hergestellten Wasserstoffs und Kohlenmonoxids kann ebenfalls ein Synthesegas erhalten werden.

Eine weitere Möglichkeit zur Herstellung von Synthesegas stellt die Ko-Elektrolyse von Wasser und Kohlendioxid dar. Je nach dem verwendeten Elektrolyten und dem eingesetzten Katalysator existieren dabei unterschiedliche Ausgestaltungen, die sich insbesondere durch die Betriebstemperatur und die an den Elektroden ablaufenden elektrochemischen Reaktionen unterscheiden.

Bei der sogenannten Niedertemperatur-(NT-)Ko-Elektrolyse kann eine Protonenaustauschmembran (engl. Proton Exchange Membrane, PEM) eingesetzt werden. In diesem Fall laufen die folgenden Kathodenreaktionen ab:

CO₂ + 2 e⁻ + 2 H⁺ → CO + H₂O (1)

2 e⁻ + 2 H⁺ → H₂ (2)

Es läuft ferner folgende Anodenreaktion ab:

H₂O → ½ O₂ + 2 H⁺ - 2e⁻ (3)

In Varianten entsprechender Verfahren können an der Anode anstelle von Protonen andere positive Ladungsträger wie Ionen eines Elektrolytsalzes gebildet, über eine entsprechend ausgestaltete Membran transportiert, und an der Kathode umgesetzt werden. Ein Beispiel für ein Elektrolytsalz ist Kaliumhydroxid. In diesem Fall handelt es sich bei den positiven Ladungsträgern um Kaliumionen. Weitere Varianten umfassen beispielsweise die Verwendung von Anionenaustauschmembranen (Anion Exchange Membranes, AEM). In sämtlichen Varianten erfolgt jedoch der Transport der Ladungsträger nicht, wie in den nachfolgend erläuterten Festoxid-Elektrolysezellen, in Form von Sauerstoffionen, sondern in Form der erläuterten Ladungsträger. Zu Details sei beispielsweise auf Delacourt et al. (2008), J. Electrochem. Soc. 155(1), B42-B49, DOI: 10.1149/1.2801871, verwiesen.

Die Protonen oder andere entsprechende Ladungsträger werden über eine Membran selektiv von der Anoden- zur Kathodenseite übertragen. An der Kathode konkurrieren dann, je nach gewähltem Katalysator, die jeweiligen Bildungsreaktionen, so dass sich Synthesegase mit unterschiedlichen Wasserstoff/Kohlenmonoxid-Verhältnissen ergeben. Je nach Ausgestaltung des verwendeten Katalysators können bei der Niedertemperatur-Ko-Elektrolyse auch andere Wertprodukte gebildet werden.

Bei der Hochtemperatur-(HT-)Ko-Elektrolyse, die unter Verwendung von Festoxid-Elektrolysezellen (engl. Solid Oxide Electrolysis Cell, SOEC) durchgeführt wird, werden die folgenden Kathodenreaktionen beobachtet bzw. postuliert:

CO₂ + 2 e⁻ → CO + O²⁻ (4)

H₂O + 2 e⁻ → H₂ + O²⁻ (5)

Es laufen ferner folgende Anodenreaktion ab:

2 O²⁻ → O₂ + 4 e⁻ (6)

Die Sauerstoffionen werden hierbei im Wesentlichen selektiv über eine keramische Membran von der Anode zur Kathode geleitet.

Es ist nicht vollständig geklärt, ob die Reaktion gemäß Reaktionsgleichung 4 in der dargestellten Weise abläuft. Es ist auch möglich, dass lediglich Wasserstoff elektrochemisch gebildet wird und Kohlenmonoxid sich entsprechend der umgekehrten Wassergas-Shiftreaktion in Anwesenheit von Kohlendioxid bildet:

CO₂ + H₂ ⇄ H₂O + CO (7)

In der Regel befindet sich das bei der Hochtemperatur-Ko-Elektrolyse gebildete Gasgemisch im Wassergas-Shift-Gleichgewicht (oder nahe bei diesem). Auf die vorliegende Erfindung hat die konkrete Art und Weise der Bildung des Kohlenmonoxids jedoch keinen Einfluss.

Weder bei der Hoch- noch bei der Niedertemperatur-Ko-Elektrolyse erfolgt i.d.R. ein vollständiger Umsatz von Kohlendioxid und Wasser, weshalb anschließend eine Abtrennung von Kohlendioxid erfolgen muss. Das Kohlendioxid kann zur Elektrolyse rezykliert werden. Das nach einer entsprechenden Abtrennung erhaltene Produkt ist ein Synthesegas mit je nach eingesetztem Katalysator unterschiedlichem Wasserstoff/Kohlen monoxid-Verhältnis.

Die Elektrolyse von Kohlendioxid mittels Festoxid-Elektrolysezellen ist beispielsweise in der WO 2014/154253 A1, der WO 2013/131778 A2, der WO 2015/014527 A1 und der EP 2 940 773 A1 beschrieben. Hierbei ist auch eine analoge Prozessführung für die Ko-Elektrolyse und eine entsprechende Herstellung von Synthesegas erwähnt. In den genannten Druckschriften ist ferner eine Trennung von Kohlendioxid und Kohlenmonoxid unter Verwendung von Absorptions-, Adsorptions-, Membran- und kryogenen Trennverfahren offenbart, jedoch werden keine Details zur konkreten Ausgestaltung und insbesondere zu einer Kombination der Verfahren angegeben.

Die Ko-Elektrolyse von Kohlendioxid mittels Festoxid-Elektrolysezellen zu Synthesegas ist bisher nur im Labormaßstab beschrieben worden. Es wird insbesondere auf einen entsprechenden Artikel von Foit et al. (2016), Angew. Chem. 129 (20), Seiten 5488 bis 5498, DOI: 10.1002/ange.201607552, verwiesen.

Es wurde erkannt, dass in einer Hochtemperatur-Elektrolyse vorteilhafterweise reduzierende Bedingungen verwendet werden sollten, insbesondere um die verwendeten nickelhaltigen Katalysatoren vor Oxidation zu schützen. Vor allem am Eintritt einer Hochtemperatur-Elektrolysezelle, die für die Hochtemperatur-Ko-Elektrolyse eingesetzt wird, ist dies herkömmlicherweise jedoch nicht der Fall. Ferner ist es vorteilhaft, hohen Temperaturen ausgesetzten Apparaten aus Metall zur Vermeidung von Hochtemperaturkorrosionsproblemen ("Metal Dusting") nur vergleichsweise geringe Kohlenmonoxidmengen zuzuführen. Die hierbei kritischen Temperaturbereiche liegen insbesondere zwischen 400 und 800 °C.

Die vorliegende Erfindung stellt sich daher die Aufgabe, verbesserte Maßnahmen zur Herstellung reduzierender Bedingungen in einem einer Hochtemperatur-Elektrolyse zugeführten Gasgemisch, insbesondere zum Schutz vor Nickeloxidation, anzugeben und die erwähnten Hochtemperaturkorrosionsprobleme, insbesondere bei der Vorwärmung eines Elektrolyseeinsatzes, zu vermeiden. Insbesondere soll dabei Wasserstoff in ein entsprechendes Gasgemisch ohne Verwendung extern bereitgestellten Wasserstoffs bereitgestellt werden.

### Offenbarung der Erfindung

Vor diesem Hintergrund schlägt die vorliegende Erfindung ein Verfahren zur Herstellung eines zumindest Kohlenmonoxid enthaltenden Gasprodukts und eine entsprechende Anlage mit den Merkmalen der jeweiligen unabhängigen Patentansprüche vor. Bevorzugte Ausgestaltungen sind jeweils Gegenstand der abhängigen Patentansprüche sowie der nachfolgenden Beschreibung.

Vor der Erläuterung der Vorteile der vorliegenden Erfindung sollen nachfolgend weitere Grundlagen erläutert und hier verwendete Begriffe definiert werden.

Unter einem "zumindest Kohlenmonoxid enthaltenden Gasprodukt" wird hier insbesondere Kohlenmonoxid unterschiedlicher Reinheiten oder aber Synthesegas oder ein vergleichbares Gasgemisch, also ein Gasgemisch, das neben Kohlenmonoxid zumindest auch nennenswerte Mengen an Wasserstoff enthält, verstanden.

Beispielsweise kann das zumindest Kohlenmonoxid enthaltende Gasprodukt Wasserstoff und Kohlenmonoxid in gleichen oder vergleichbaren Anteilen enthalten. Das molare Verhältnis von Wasserstoff zu Kohlenmonoxid in dem Gasprodukt kann insbesondere in einem Bereich von 1:10 bis 10:1, 2:8 bis 8:2 oder 4:6 bis 6:4 liegen, wobei der Molanteil von Wasserstoff und Kohlendioxid gemeinsam bei über 50%, 60%, 70%, 80%, 90%, 95% oder 99% liegen kann und ein etwaiger verbleibender Rest insbesondere aus Kohlendioxid oder sich inert verhaltenden Gasen wie Stickstoff oder Edelgasen der Luft gebildet sein kann. Das molare Verhältnis von Wasserstoff zu Kohlenmonoxid in dem Gasprodukt kann insbesondere bei ca. 1 oder ca. 2 oder ca. 3 liegen, die Stöchiometriezahl insbesondere bei ca. 2. Die Stöchiometriezahl SN drückt die Zusammensetzung des Synthesegases hinsichtlich der Komponenten Wasserstoff, Kohlendioxid und Kohlenmonoxid aus, wobei jeweils Stoffmengenanteile x betrachtet werden. Sie berechnet sich zu SN = (xH2 - xCO2) / (xCO + xCO2).

Liegt in dem Rohgas kein oder wenig Wasserstoff vor, ist auch das Gasprodukt entsprechend arm an oder frei von Wasserstoff, es handelt sich also um ein an Kohlenmonoxid reiches Gasprodukt bzw. reines Kohlenmonoxid.

Ein in der Hochtemperatur-Ko-Elektrolyse gebildete Elektrolyserohprodukt, d.h. ein Gasgemisch, das direkt der Kathodenseite einer entsprechenden Elektrolysezelle entnommen wird, kann im nichtwässrigen Anteil (d.h. "trocken") insbesondere einen Gehalt von 0 bis 80% Wasserstoff, 10 bis 90% Kohlenmonoxid und 10 bis 80% Kohlendioxid aufweisen.

Generell können Stoffströme, Gasgemische usw. im hier verwendeten Sprachgebrauch reich oder arm an einer oder mehreren Komponenten sein, wobei die Angabe "reich" für einen Gehalt von wenigstens 50%, 60%, 75%, 80%, 90%, 95%, 98%, 99%, 99,5%, 99,9% oder 99,99% und die Angabe "arm" für einen Gehalt von höchstens 50%, 40%, 25%, 20%, 10%, 5%, 2%, 1%, 0,5%, 0,1% oder 0,01% auf molarer, Gewichts- oder Volumenbasis stehen kann. Sind mehrere Komponenten angegeben, bezieht sich die Angabe "reich" oder "arm" auf die Summe aller Komponenten. Ist hier beispielsweise von "Kohlenmonoxid" die Rede, kann es sich um ein Reingas, aber auch ein an Kohlenmonoxid reiches Gemisch handeln. Ein Gasgemisch, das "überwiegend" eine oder mehrere Komponenten enthält, ist insbesondere reich an dieser oder diesen im erläuterten Sinn.

Stoffströme, Gasgemische usw. können im hier verwendeten Sprachgebrauch außerdem "angereichert" oder "abgereichert" an einer oder mehreren Komponenten sein, wobei sich diese Begriffe auf einen Gehalt in einem Ausgangsgemisch beziehen. Sie sind "angereichert", wenn sie zumindest den 1,1-fachen, 1,5-fachen, 2-fachen, 5-fachen, 10-fachen, 100-fachen oder 1.000-fachen Gehalt, "abgereichert", wenn sie höchstens den 0,9-fachen, 0,75-fachen, 0,5-fachen, 0,1-fachen, 0,01-fachen oder 0,001-fachen Gehalt einer oder mehrerer Komponenten, bezogen auf das Ausgangsgemisch, enthalten.

Unter einem "Permeat" wird im Rahmen der vorliegenden Anmeldung ein Gemisch verstanden, das überwiegend oder ausschließlich Komponenten aufweist, die von einer in einer Membrantrennung eingesetzten Membran nicht oder überwiegend nicht zurückgehalten werden, die also die Membran (im Wesentlichen oder zumindest bevorzugt) ungehindert passieren. Im Rahmen der Erfindung werden insbesondere Membranen eingesetzt, die Wasserstoff im Gegensatz zu schwereren Komponenten, insbesondere Kohlenmonoxid, bevorzugt passieren lassen. Auf diese Weise wird das Permeat an Wasserstoff angereichert. Bei einer entsprechenden Membran handelt sich beispielsweise um kommerzielle Polymermembranen, welche großtechnisch zur Abtrennung von Kohlendioxid und/oder Wasserstoff eingesetzt werden.

Entsprechend handelt es sich bei einem "Retentat" um ein Gemisch, das überwiegend Komponenten aufweist, die von der in der Membrantrennung eingesetzten Membran vollständig oder zumindest überwiegend zurückgehalten werden. Das im Rahmen der vorliegenden Erfindung betrachtete Retentat ist insbesondere an Wasserstoff ab- und an zumindest einer schwereren Verbindung angereichert.

### Vorteile der Erfindung

Wie erwähnt ist es vorteilhaft, eine Hochtemperatur-Ko-Elektrolyse unter reduzierenden Bedingungen durchzuführen, um eine Oxidation des verwendeten, insbesondere nickelhaltigen, Katalysators in der Elektrolysezelle zu vermeiden. Grundsätzlich kann hierzu Wasserstoff zu einem der Hochtemperatur-Ko-Elektrolyse unterworfenen Gasgemisch zudosiert werden. Durch eine derartige Zudosierung können entsprechende Materialprobleme vermieden werden. Allerdings ist eine externe Bereitstellung von Wasserstoff hierzu aufwendig und teuer.

Im Rahmen der vorliegenden Erfindung wurde es nun als besonders vorteilhaft erkannt, den in einem Einsatzgemisch für eine Hochtemperatur-Ko-Elektrolyse verwendeten Wasserstoff zumindest teilweise durch Umsetzen von Kohlenmonoxid mit Wasser in einem zur Hochtemperatur-Ko-Elektrolyse zurückgeführten Gasgemisch bereitzustellen. Hierzu wird die bekannte Wassergas-Shift-Reaktion (WGS) eingesetzt.

Die Wassergas-Shift-Reaktion wird konventionellerweise zur Verringerung des Kohlenstoffmonoxidanteils in Synthesegas und zur Erzeugung von Wasserstoff eingesetzt. Die Reaktionsgleichung ist auch als Konvertierungsgleichgewicht bekannt:

CO + H₂O ⇄ CO₂ + H₂ (8)

Unter Zugabe von Wasserdampf reagiert Kohlenmonoxid bei der Wassergas-Shift-Reaktion zu Kohlendioxid und Wasserstoff.

Zur Durchführung der Wassergas-Shift-Reaktion verwendbare Reaktoren, die insbesondere Eisen(III)-oxid-Katalysatoren aufweisen können, sind allgemein bekannt. Insbesondere können hierbei auch sogenannte Hochtemperatur- und Niedertemperatur-Shiftstufen (kurz HT- und NT-Shift) miteinander gekoppelt werden. Auch sogenannte Mitteltemperatur- und Ultra-Niedrigtemperatur-Katalysatoren sind grundsätzlich bekannt und können im Rahmen der Erfindung eingesetzt werden.

Durch den Einsatz der Wassergas-Shift-Reaktion kann im Rahmen der vorliegenden Erfindung sowohl das Problem der Hochtemperaturkorrosion aufgrund anwesenden Kohlenmonoxids als auch das Problem der Katalysatoroxidation durch das Vorliegen oxidativer Bedingungen überwunden werden. Die Wassergas-Shift-Reaktion führt zu einer Elimination von korrosivem Kohlenmonoxid unter gleichzeitiger Bildung von Wasserstoff, der für reduzierende Bedingungen sorgt. Gleichzeitig wird zusätzliches Kohlendioxid gebildet, das in der Hochtemperatur-Ko-Elektrolyse wieder zu entsprechenden Produkten umgesetzt werden kann. Ein weiterer Vorteil ist der, dass durch die Möglichkeit, Kohlenmonoxid entsprechend umzusetzen, dieses nicht vollständig abgetrennt werden muss, so dass sich der für die Bearbeitung eines Elektrolyserohprodukts zu dem Gasprodukt erforderliche Aufwand verringert.

Das der Hochtemperatur-Elektrolysezelle zugeführte Gasgemisch wird dabei im Rahmen der vorliegenden Anmeldung als "Elektrolyseeinsatz" bezeichnet. Es enthält aufgrund der Verwendung der erfindungsgemäß vorgeschlagenen Maßnahmen Wasserstoff sowie ferner zumindest Kohlendioxid und Wasser.

Wasserstoff kann aus dem Elektrolyserohprodukt oder dem unter Verwendung zumindest eines Teils des Elektrolyserohprodukts gebildeten weiteren Gasgemisch über Polymermembranen durch Anlegen eines Partialdruckunterschiedes abgetrennt werden, wobei die Selektivität der verwendeten Membran aus unterschiedlichen Diffusionsgeschwindigkeiten der Gaskomponenten durch die Membran resultiert. Entsprechende Polymermembranen werden kommerziell eingesetzt.

Alternativ zu einer derartigen partialdruckgetriebenen Wasserstoffabtrennung kann auch ein elektrisches Potential über eine protonenleitende Membran als Triebkraft genutzt werden. Hierzu wird Wasserstoff auf der Retentatseite mittels eines geeigneten Katalysators reduziert und als Proton entlang des angelegten elektrischen Potentials über die Membran transportiert. Auf der Permeatseite der Membran wird unter Kombination des Protons mit Elektronen aus dem äußeren Stromkreis wieder molekularer Wasserstoff erhalten.

Neben einer Niedertemperatur-(NT-)Membrantrennung über Polymermembranen kann auch eine Hochtemperatur-(HT-)Membrantrennung zur Abtrennung von Wasserstoff eingesetzt werden, welche sowohl über einen Partialdruckunterschied als auch über ein elektrisches Potential betrieben werden kann. Hochtemperatur-Membranen zur Verwendung in einem entsprechenden Verfahren sind meist metallischer (z. B. Palladium), keramischer (Festoxide) oder hybrider Natur (Palladium-Komposit). Entsprechende Membranen sind beispielsweise in der Encyclopedia of Membrane Science and Technology, DOI: 10.1002/9781118522318.emst095, oder bei G.S. Burkhanov et al., "Palladium-Based Alloy Membranes for Separation of High Purity Hydrogen from Hydrogen-Containing Gas Mixtures", Platinum Metals Rev., 2011, 55, Seiten 3 bis 12 beschrieben.

Da durch den Einsatz der vorliegenden Erfindung dem Elektrolyseeinsatz kein Wasserstoff zugegeben werden muss, sei es aus externen Quellen oder durch eine erläuterte Abtrennung aus einem Elektrolyserohprodukt, kann entsprechender Wasserstoff für andere Zwecke genutzt bzw. in dem gebildeten Gasgemisch belassen werden, was dessen Bearbeitung deutlich vereinfacht. Die vorliegende Erfindung kann jedoch auch zusätzlich zu einer Abtrennung und ggf. Rückführung von Wasserstoff aus dem Elektrolyserohprodukt erfolgen; insbesondere dann, wenn die Menge des mittels der Wassergas-Shift-Reaktion erzeugten Wasserstoffs nicht ausreicht oder Wasserstoff beispielsweise als Produkt bereitgestellt werden soll.

Die vorliegende Erfindung besteht in einem zentralen Aspekt also in einer Kombination aus einer Hochtemperatur-Ko-Elektrolyse von Kohlendioxid und Wasserdampf mit einer Wassergas-Shift-Reaktion zur Verringerung des Kohlenmonoxidgehalts und gleichzeitiger Bildung von Wasserstoff in einem zur Hochtemperatur-Ko-Elektrolyse zurückgeführten Gasgemisch. Die erfindungsgemäß vorgeschlagenen Maßnahmen können mit einer Membrantrennung zur Wasserstoffabtrennung kombiniert werden. Der hierbei abgetrennte Wasserstoff kann ebenfalls zur Elektrolyse zurückgeführt oder als Produkt oder ein Teil eines Produkts bereitgestellt werden. Die in einer entsprechenden Ausgestaltung verwendeten Membranen können, wie auch nachfolgend noch erläutert, unterschiedlich ausgestaltet werden.

Durch den Einsatz der vorliegenden Erfindung ergibt sich der Vorteil, dass in einem entsprechenden Elektrolyseeinsatz reduzierende Bedingungen geschaffen werden und damit insbesondere eine Nickeloxidation vermieden werden kann. Durch die Bereitstellung des Wasserstoffs mittels der erfindungsgemäß vorgeschlagenen Maßnahmen kann ein entsprechender Elektrolyseeinsatz ohne externen Wasserstoffimport bereitgestellt werden. Durch die im Rahmen der vorliegenden Erfindung verwendete Wassergas-Shift-Reaktion in einer Kohlenmonoxid enthaltenden rückgeführten Fraktion ist entsprechender Wasserstoff bereitstellbar. Die vorliegende Erfindung ist insbesondere in Kombination mit adsorptiven und membranbasierten Verfahren zur Abtrennung und Rezyklierung von Kohlendioxid aus Elektrolyserohprodukt vorteilhaft, da bei solchen Konzepten Kohlenmonoxid meist nur mit hohem Aufwand quantitativ von Kohlendioxid getrennt werden kann. In einem entsprechenden Verfahren wird daher ein Gasgemisch erhalten, das neben Kohlendioxid auch beträchtliche Mengen an Kohlenmonoxid enthält. Letzteres kann durch die Wassergas-Shift-Reaktion zu Wasserstoff umgesetzt werden, so dass die eingangs erwähnten Vorteile erzielt werden.

Insgesamt schlägt die vorliegende Erfindung ein Verfahren zur Herstellung eines zumindest Kohlenmonoxid enthaltenden Gasprodukts vor. Neben dem Kohlenmonoxid kann ein entsprechendes Gasprodukt auch Wasserstoff aufweisen, wie erwähnt. Mit anderen Worten kann das erfindungsgemäße Verfahren insbesondere zur Herstellung eines Synthesegasprodukts, wie es eingangs erläutert wurde, verwendet werden. Das erfindungsgemäße Verfahren umfasst dabei, einen zumindest Kohlendioxid, Wasser und Wasserstoff enthaltenden Elektrolyseeinsatz zu bilden und einer Kathodenseite einer Hochtemperatur-Elektrolysezelle zuzuführen.

Erfindungsgemäß wird von der Kathodenseite der Hochtemperatur-Elektrolysezelle ein zumindest Wasser, Kohlendioxid, Kohlenmonoxid und Wasserstoff enthaltendes Elektrolyserohprodukt abgeführt. Ein derartiger Betrieb einer Hochtemperatur-Elektrolysezelle wurde bereits in der Einleitung ausführlich erläutert. Die Anodenseite einer entsprechenden Elektrolysezelle wird typischerweise mit Luft gespült, wie dies auch im Rahmen der vorliegenden Erfindung erfolgen kann. Auf diese Weise können hier gebildete Elektrolyseprodukte, insbesondere Sauerstoff, abtransportiert werden.

Die vorliegende Erfindung umfasst, dass aus zumindest einem Teil des Elektrolyserohprodukts oder aus einem unter Verwendung zumindest eines Teils des Elektrolyserohprodukts gebildeten Gasgemisch eine zumindest Kohlenmonoxid enthaltende Fraktion abgetrennt wird, wobei das in der zumindest Kohlenmonoxid enthaltenden Fraktion enthaltene Kohlenmonoxid zumindest teilweise mit Wasser unter Bildung von Wasserstoff einer Wassergas-Shift-Reaktion unterworfen wird.

Erfindungsgemäß wird zumindest ein Teil des in der Wassergas-Shift-Reaktion gebildeten Wasserstoffs bei der Bildung des Elektrolyseeinsatzes verwendet. Auf diese Weise können die erfindungsgemäßen Vorteile erzielt werden, die, wie erläutert, insbesondere darin bestehen, dass für die Durchführung einer entsprechenden Hochtemperatur-Ko-Elektrolyse unter reduzierenden Bedingungen zur Vermeidung einer Nickeloxidation kein externer Wasserstoff zugeführt werden muss, und dass der Gehalt an Kohlenmonoxid in einer derartigen Fraktion, die in die Hochtemperatur-Ko-Elektrolyse rückgeführt wird, verringert wird, so dass sich keine Hochtemperaturkorrosionsprobleme ergeben.

Ein weiterer Vorteil besteht darin, dass durch die Exothermie der Wassergas-Shift-Reaktion Wärme bereitgestellt wird, mittels welcher die rückgeführte Fraktion und/oder ein entsprechender Frischeinsatz vor der Hochtemperatur-Ko-Elektrolyse erwärmt werden können. Auf diese Weise kann der Umfang von verfahrensextern zugeführter Energie für eine entsprechende Erwärmung (sogenannte "Feedvorwärmung") verringert werden, was zu einer entsprechenden Einsparung führt.

Generell wird hier unter "verfahrensexterner" Energie solche Energie verstanden, die keine Anteile umfasst, welche in dem Verfahren selbst erzeugt werden. Entsprechend werden unter "verfahrensexternen" Stoffströmen solche Stoffströme verstanden, die keine Stoffanteile umfassen, die aus in dem Verfahren gebildeten Stoffströmen stammen. Insbesondere umfasst hier "verfahrensexternes" Kohlendioxid solches Kohlendioxid, das nicht aus dem Elektrolyserohprodukt stammt.

Die Kohlenmonoxid nthaltende Fraktion, die aus zumindest einem Teil des Elektrolyserohprodukts oder aus einem unter Verwendung zumindest eines Teils des Elektrolyserohprodukts gebildeten Gasgemisch abgetrennt und der Wassergas-Shift-Reaktion unterworfen wird, weist insbesondere einen Gehalt von 50 bis 95%, vorzugsweise von 70 bis 95% Kohlendioxid, 2 bis 50%, vorzugsweise 5 bis 30% Kohlenmonoxid und 0 bis 10%, vorzugsweise 0 bis 5% Wasserstoff auf. Hingegen weist der Elektrolyseeinsatz insbesondere einen Gehalt von 80 bis 95%, vorzugsweise von 90 bis 95% Kohlendioxid, 0 bis 5%, vorzugsweise 0 bis 3% Kohlenmonoxid und von 2 bis 20%, insbesondere 5 bis 10% Wasserstoff auf. Die entsprechenden Gehalte beziehen sich insbesondere auf den wasserfreien Anteil.

Gemäß einer besonders bevorzugten Ausgestaltung der vorliegenden Erfindung wird die Wassergas-Shift-Reaktion unter Anwesenheit von Kohlenmonoxid und Wasserdampf, jedoch bei niedrigen Wasserstoffgehalten oder bevorzugt unter Abwesenheit von Wasserstoff durchgeführt. Die Abwesenheit von Wasserstoff und ein geeignetes Temperaturniveau von unter 700 °C führt zu einer günstigen Beeinflussung der Gleichgewichtslage der Wassergas-Shift-Reaktion in Richtung der Wasserstoff- und Kohlendioxidbildung. Geringere Temperaturen reduzieren die Reaktionsrate, daher sollte sich das Temperaturfenster vorteilhafterweise zwischen 200 und 700 °C bewegen. Insbesondere kann im Rahmen der vorliegenden Erfindung die Wassergas-Shift-Reaktion bei einem derartigen Temperaturniveau von 200 bis 700 °C, insbesondere einem Temperaturniveau von 300 bis 500 °C, durchgeführt. Bei diesem Temperaturniveau handelt es sich insbesondere um das Temperaturniveau, bei dem die zumindest Kohlenmonoxid enthaltende Fraktion in einen oder mehrere zur Durchführung der Wassergas-Shift-Reaktion verwendete Reaktoren eingespeist und auf den diese stromauf des oder der Reaktoren vorgeheizt wird. Wie auch nachfolgend erläutert, kann die Wassergas-Shift-Reaktion insbesondere adiabat durchgeführt werden, so dass sich die Temperatur durch die freigesetzte Reaktionswärme entsprechend erhöhen kann.

Im Rahmen der vorliegenden Erfindung kann die Wassergas-Shift-Reaktion ferner unter Anwesenheit von Kohlendioxid durchgeführt werden. Dies ermöglicht es insbesondere, wie erläutert, adsorptive und membranbasierte Verfahren zur Abtrennung und Rezyklierung von Kohlendioxid aus dem Elektrolyserohprodukt zu verwenden, da die in entsprechenden Verfahren erhaltenen Gasgemische neben Kohlendioxid auch beträchtliche Mengen an Kohlenmonoxid enthalten und Kohlenmonoxid und Kohlendioxid nicht aufwendig voneinander getrennt werden müssen. Das Kohlendioxid kann mit dem in der Wassergas-Shift-Reaktion aus dem Kohlenmonoxid gebildeten Wasserstoff in die Elektrolyse zurückgeführt werden.

Mit anderen Worten enthält die zumindest Kohlenmonoxid enthaltende Fraktion vorteilhafterweise Kohlendioxid und das in der Wassergas-Shift-Reaktion anwesende Kohlendioxid umfasst zumindest einen Teil des Kohlendioxids in der zumindest Kohlenmonoxid enthaltenden Fraktion. Die Abtrennung der zumindest Kohlenmonoxid enthaltenden Fraktion wird vorteilhafterweise zumindest teilweise mittels einer adsorptiven Trennung oder einer Membrantrennung durchgeführt.

Grundsätzlich kann das der Wassergas-Shift-Reaktion zugeführte Kohlendioxid jedoch auch verfahrensextern bereitgestelltes Kohlendioxid umfassen. Alternativ oder zusätzlich kann auch vorgesehen sein, dass der Hochtemperatur-Elektrolysezelle und verfahrensextern bereitgestelltes Kohlendioxid zugeführt wird, welches nicht der Wassergas-Shift-Reaktion zugeführt wird.

Wie bereits erläutert, besteht ein weiterer Vorteil der vorliegenden Erfindung insbesondere darin, dass die aufgrund der Exothermie der Wassergas-Shift-Reaktion freiwerdende Wärme genutzt werden kann. Daher umfasst ein Verfahren gemäß einer besonders bevorzugten Ausführungsform der vorliegenden Erfindung, dass in der Wassergas-Shift-Reaktion gebildete Reaktionswärme zumindest teilweise zur Vorwärmung wenigstens einer der Hochtemperatur-Elektrolysezelle zugeführten Komponente eingesetzt wird. Dies kann durch eine direkte Erwärmung des der Wassergas-Shift-Reaktion unterworfenen Stoffstroms selbst erfolgen, insbesondere wenn ein oder mehrere zur Durchführung der Wassergas-Shift-Reaktion verwendete Reaktoren adiabat betrieben werden, also keine Kühlung zur Abführung der Reaktionswärme vorgenommen wird. Eine entsprechende Erwärmung kann aber auch die Erwärmung eines oder mehrerer anderer Stoffströme umfassen, beispielsweise von verfahrensextern bereitgestelltem Kohlendioxid, das der Elektrolyse zugeführt wird. Die Erwärmung kann optional auch unter Verwendung von Wärmeüberträgermedien wie Dampf und dergleichen, erfolgen.

In jedem Fall wird zumindest ein Teil des Elektrolyserohprodukts oder des unter Verwendung zumindest eines Teils des Elektrolyserohprodukts gebildeten Gasgemischs einer Abkühlung und Wasserentfernung unterworfen, bevor dieses der Abtrennung der zumindest Kohlenmonoxid enthaltenden Fraktion unterworfen wird.

Zur Energierückgewinnung kann die Abkühlung und die Entfernung von Wasser einen Wärmeaustausch mit einem zur Bereitstellung von Dampf verwendeten Wasser- oder Dampfstrom umfassen. Auf diese Weise gebildeter Dampf kann dabei insbesondere zur Bereitstellung des Elektrolyseeinsatzes verwendet, also der Hochtemperatur-Ko-Elektrolyse unterworfen werden. In jedem Fall wird dabei vorteilhafterweise sichergestellt, dass die Metalltemperaturen eines entsprechenden Wärmetauschers ein vorgegebenes Temperaturniveau nicht überschreiten, so dass keine Korrosionsprobleme auftreten. Das Temperaturniveau liegt vorteilhafterweise bei weniger als 500 °C, insbesondere weniger als 400 °C oder weniger als 300 °C.

Eine besonders vorteilhafte Ausgestaltung der vorliegenden Erfindung umfasst, dass das Elektrolyserohprodukt, das unter Verwendung zumindest eines Teils des Elektrolyserohprodukts gebildete und zumindest Kohlenmonoxid und Wasserstoff enthaltende Gasgemisch, oder ein nach der Abtrennung der zumindest Kohlenmonoxid enthaltenden Fraktion verbleibendes Gasgemisch zumindest teilweise als Trenneinsatz einer Membrantrennung unterworfen wird, in der ein gegenüber dem Trenneinsatz an Wasserstoff an- und an Kohlenmonoxid abgereichertes Permeat einerseits sowie ein an Wasserstoff ab- und an Kohlenmonoxid angereichertes Rententat gebildet werden.

Wie auch nachfolgend erläutert, kann das weitere Gasgemisch bzw. der Trenneinsatz auch Kohlendioxid enthalten, sofern dieses nicht bereits stromauf entfernt wurde. Das in dem Elektrolyserohprodukt bzw. dem weiteren Gasgemisch in diesem Fall enthaltene Kohlendioxid verteilt sich bei Einsatz bestimmter Membrantypen, insbesondere einer Polymermembran, zwischen Permeat und Retentat, wobei aber die Membrantrennung derart ausgeführt werden kann, dass kein Kohlenmonoxid in signifikanten Mengen in das Permeat übergeht. Ist dies nicht möglich, kann auch eine zweistufige Membrantrennung eingesetzt werden. Bei Einsatz anderer Membrantypen, beispielsweise einer Palladiummembran, kann Wasserstoff selektiv oder nahezu selektiv abgetrennt werden.

Im Rahmen dieser Ausgestaltung der Erfindung kann zumindest ein Teil des Permeats oder ein unter Verwendung zumindest eines Teils des Permeats gebildetes Gasgemisch, also insbesondere ein an Wasserstoff angereichertes Permeat oder Wasserstoff aus einem derartigen Permeat, bei der Bildung des Elektrolyseeinsatzes oder auf andere Weise verwendet werden. Auf diese Weise kann weiterer Wasserstoff in die Hochtemperatur-Elektrolysezelle eingebracht werden, beispielsweise als Wasserstoffprodukt.

Die Bildung eines Gasgemischs, das als Trenneinsatz der Membrantrennung unterworfen wird, kann insbesondere eine zumindest teilweise Abtrennung von Kohlendioxid aus dem Elektrolyserohprodukt oder einem Teil hiervon umfassen. Dies kann insbesondere in Form einer adsorptiven Trennung oder Membrantrenntung erfolgen. Bei der Abtrennung von Kohlendioxid kann dabei insbesondere die mehrfach erwähnte Fraktion gebildet werden, die Kohlenmonoxid (und in diesem Fall auch Kohlendioxid) enthält. In dieser Ausgestaltung wird der Vorteil erzielt, dass eine geringere Gasmenge auf das vergleichsweise hohe Druckniveau der Membrantrennung gebracht werden muss. Alternativ ist aber auch möglich, dass der Trenneinsatz zur Membrantrennung noch Kohlendioxid enthält, also dass keine oder zumindest keine vollständige Kohlendioxidabtrennnung stromauf der Membrantrennung durchgeführt wird. Eine entsprechende Abtrennung und insbesondere die Bildung der Kohlenmonoxid (und Kohlendioxid) enthaltenden Fraktion kann daher stromab der Membrantrennung erfolgen.

Gemäß einer besonders bevorzugten Ausgestaltung der vorliegenden Erfindung wird die Membrantrennung auf einem Temperaturniveau von -40 bis 100 °C, bevorzugt 20 bis 80°C, durchgeführt, und der der Membrantrennung zugeführte Trenneinsatz wird unter Verwendung zumindest eines Teils des Elektrolyserohprodukts gebildet, das einer Abkühlung und Entfernung von Wasser unterworfen wird.

Im Rahmen der soeben erläuterten Ausführungsform der vorliegenden Erfindung wird vorteilhafterweise eine polymerbasierte Membran eingesetzt, und es erfolgt eine Abtrennung von Wasserstoff bzw. eine entsprechende Bildung eines an Wasserstoff angereicherten Permeats stromab einer Verdichtung des Elektrolyserohprodukts oder eines aus diesem gebildeten Gasgemischs, insbesondere in einem an sich bekannten sogenannten Rohgasverdichter. Im Zuge dieser Verdichtung kann insbesondere auch Kondensat abgeschieden und zurückgeführt werden.

Ein entsprechend verdichtetes Gasgemisch wird dabei insbesondere bei einer Temperatur zwischen 20 und 80 °C in ein Membranmodul gegeben, das die zuvor erläuterte An- bzw. Abreicherung vornimmt. Der auf diese Weise gebildete Permeatstrom liegt auf einem geringeren Druckniveau als der entsprechende Retentatstrom vor, allerdings typischerweise auf einem höheren Druckniveau als jenem, auf dem die Hochtemperatur-Elektrolysezelle betrieben wird. Daher kann ein entsprechendes Permeat insbesondere auch ohne zusätzlichen Verdichter zur Hochtemperatur-Elektrolysezelle rezykliert werden.

In der erläuterten Ausgestaltung beträgt ein Einspeisedruckniveau in die erläuterte Membrantrennung insbesondere 5 bis 50 bar (abs.), vorzugsweise 20 bis 40 bar (abs.) und der Entnahmedruck des Permeats insbesondere 1 bis 10 bar (abs.), vorzugsweise 2 bis 5 bar (abs.). Der Elektrolysedruck, also der Druck, bei dem die Hochtemperatur-Ko-Elektrolyse kathodenseitig in der Hochtemperatur-Elektrolysezelle durchgeführt wird, beträgt im Rahmen der Erfindung insbesondere 1 bis 20 bar (abs.), vozugsweise 2 bis 10 bar (abs.).

Alternativ zu der soeben erläuterten Ausgestaltung der Erfindung kann auch auf eine Verdichtung vor der Membrantrennung verzichtet werden. Auf eine entsprechende Verdichtung vor der Membrantrennung kann dann verzichtet werden, wenn die Membrantrennung auf einem geringeren Druckniveau als die Hochtemperatur-Elektrolysezelle betrieben wird. Dies kann insbesondere dann der Fall sein, wenn die Membrantrennung wie nachfolgend erläutert durchgeführt wird. In entsprechenden Fällen muss jedoch der rückgeführte Strom entsprechend verdichtet werden.

Im Rahmen der vorliegenden Erfindung können grundsätzlich unterschiedliche Membrantrennverfahren verwendet werden. Diese wurden bereits zuvor erläutert. So kann gemäß einer Ausgestaltung der vorliegenden Erfindung eine Membrantrennung eingesetzt werden, deren Triebkraft überwiegend oder ausschließlich durch ein Partialdruckgefälle über eine oder mehrere in der Membrantrennung eingesetzte Membranen eingestellt wird. In diesem Fall erfordert das Bilden des der Membrantrennung zugeführten Trenneinsatzes insbesondere eine entsprechende Verdichtung, insbesondere auf ein oben erwähntes Druckniveau. Bei dieser Verfahrensvariante handelt es sich also um ein klassisches Membrantrennverfahren, das insbesondere ohne Verwendung einer elektrischen Spannung durchgeführt wird.

Alternativ oder zusätzlich ist es jedoch auch möglich, eine Membrantrennung einzusetzen, deren Triebkraft überwiegend oder ausschließlich durch ein elektrisches Spannungsgefälle über eine oder mehrere in der Membrantrennung verwendete Membranen eingestellt wird. Der besondere Vorteil einer entsprechenden Verfahrensvariante ist der, dass hier stromauf der Membrantrennung keine Verdichtung des der Membrantrennung zugeführten Gasgemischs erfolgen muss. Dieses kann vielmehr der Membrantrennung auf einem deutlich geringeren Druckniveau zugeführt werden, und es muss anschließend nur das Retentat für die nachfolgende Verwendung weiterverdichtet werden. Alternativ kann jedoch auch eine derartige Verfahrensvariante derart durchgeführt werden, dass das der Membrantrennung zugeführte Gasgemisch entsprechend verdichtet wird. Das Druckniveau der Membrantrennung, also deren Eingangsdruck, kann grundsätzlich bei 1 bis 50 bar, beispielseweise bei 2 oder 1,3 bis 10 bar liegen.

Ein entsprechend gebildetes Retentat kann noch Kohlenmonoxid enthalten, das sich insbesondere zwischen Permeat und Retentat verteilen kann, da es weder vollständig in das Permeat noch vollständig in das Retentat übergeht. Daher kann gemäß einer besonders bevorzugten Ausführungsform der vorliegenden Erfindung vorgesehen sein, dass zumindest ein Teil des Permeats oder ein unter Verwendung zumindest eines Teils des Permeats gebildetes Gasgemisch als weiterer Trenneinsatz einer weiteren Membrantrennung unterworfen wird.

In der weiteren Membrantrennung können ein weiteres Permeat und ein weiteres Retentat gebildet werden, wobei das weitere Permeat gegenüber dem weiteren Trenneinsatz an Kohlenmonoxid abgereichert ist, und wobei zumindest ein Teil des weiteren Permeats oder ein Gasgemisch, das unter Verwendung zumindest eines Teils des weiteren Permeats gebildet wird, stattdessen bei der Bildung des Elektrolyseeinsatzes verwendet wird. Das weitere Permeat kann insbesondere frei oder im Wesentlichen frei von Kohlenmonoxid sein.

Durch eine Abreicherung des Permeats an Kohlenmonoxid kann sichergestellt werden, dass bekannte Hochtemperaturkorrosionsprobleme, die bei erhöhten Kohlenmonoxidgehalten und hohen Temperaturen in Metallapparaturen auftreten können (sogenanntes "Metal Dusting") vermieden werden können.

In der erläuterten Ausgestaltung der vorliegenden Erfindung wird vorteilhafterweise das in der weiteren Membrantrennung gebildete weitere Retentat bzw. ein Teil davon nach stromab der Elektrolysezelle zurückgeführt, und zwar insbesondere vor die (erste) Membrantrennung, insbesondere vor eine entsprechende Verdichtung. Das weitere Retentat oder ein Teil hiervon wird also, mit anderen Worten, zumindest teilweise mit zumindest einem Teil des Elektrolyserohprodukts oder mit zumindest einem Teil eines aus dem Elektrolyserohprodukt gebildeten Gasgemischs vereinigt.

Das Kohlenmonoxid in dem weiteren Retentat kann auf diese Weise in das Gasprodukt überführt werden. Durch den Einsatz der soeben erläuterten Verfahrensvariante können die erläuterten Probleme vermieden werden. Es ist jedoch grundsätzlich erforderlich, das Permeat zur Bildung des weiteren Trenneinsatzes in einem zusätzlichen Verdichter zu verdichten.

Gemäß einer alternativen Ausgestaltung der vorliegenden Erfindung kann die Membrantrennung auch in Form einer Hochtemperatur-Membrantrennung durchgeführt werden, wie sie ebenfalls zuvor bereits erwähnt wurde. Bei dieser Ausgestaltung der vorliegenden Erfindung wird die Membrantrennung auf einem ersten Temperaturniveau von mehr als 200 °C oder mehr als 500 °C, insbesondere von 300 bis 1.000 °C oder 500 bis 900 °C betrieben, wobei die Hochtemperatur-Elektrolysezelle auf diesem ersten Temperaturniveau betrieben wird, oder wobei die Hochtemperatur-Elektrolysezelle auf einem zweiten Temperaturniveau oberhalb des ersten Temperaturniveaus betrieben wird und das Elektrolyserohprodukt auf das zweite Temperaturniveau abgekühlt wird.

Vorteilhafterweise befindet sich das in der Hochtemperatur-Membrantrennung eingesetzte Temperaturniveau dabei deutlich oberhalb der Verkokungstemperatur gemäß dem Boudouard-Gleichgewicht. Mit anderen Worten kann hier eine Anpassung der Temperaturniveaus der Hochtemperatur-Ko-Elektrolyse und der Hochtemperatur-Membrantrennung erfolgen. Um ein für diese Ausgestaltung erforderliches Druckniveau zu erreichen, ist die vorgestellte Verfahrensvariante typischerweise nur für entsprechend höhere Elektrolysedrücke in der Elektrolysezelle vorteilhaft.

Das Druckniveau, auf dem die Hochtemperatur-Membrantrennung betrieben wird, beträgt hierbei insbesondere 5 bis 50 bar, vorzugsweise 10 bis 20 bar. Ein entsprechendes Druckniveau oder ein nochmals höheres Druckniveau wird in der Hochtemperatur-Elektrolyse verwendet.

Auch bei der Durchführung einer Hochtemperatur-Membrantrennung erfolgen eine Abkühlung und eine Entfernung von Wasser, die jedoch im Falle der Hochtemperatur-Membrantrennung erst in dem Retentat und nicht wie zuvor in dem Elektrolyserohprodukt vorgenommen werden.

In sämtlichen Fällen kann zur Energierückgewinnung die Abkühlung und die Entfernung von Wasser einen Wärmeaustausch mit einem zur Bereitstellung von Dampf verwendeten Wasser- oder Dampfstrom umfassen. Auf diese Weise gebildeter Dampf kann dabei insbesondere zur Bereitstellung des Elektrolyseeinsatzes verwendet, also der Hochtemperatur-Ko-Elektrolyse unterworfen werden. In jedem Fall wird dabei vorteilhafterweise sichergestellt, dass die Metalltemperaturen eines entsprechenden Wärmetauschers ein vorgegebenes Temperaturniveau nicht überschreiten, so dass keine Korrosionsprobleme auftreten. Das Temperaturniveau liegt vorteilhafterweise weniger als 500 °C, insbesondere weniger als 400 °C oder weniger als 300 °C.

Die vorliegende Erfindung erstreckt sich, wie erwähnt, auch auf eine Anlage zur Herstellung eines zumindest Kohlenmonoxid enthaltenden Gasprodukts, zu deren Merkmalen ausdrücklich auf den entsprechenden unabhängigen Vorrichtungsanspruch verwiesen wird. Insbesondere ist eine entsprechende Anlage zur Durchführung eines Verfahrens eingerichtet, wie es zuvor in unterschiedlichen Ausgestaltungen erläutert wurde. Auf diese und die damit verbundenen Vorteile wird daher in diesem Zusammenhang ausdrücklich verwiesen.

Die Erfindung wird nachfolgend unter Bezugnahme auf die beigefügten Zeichnungen näher erläutert, welche bevorzugte Ausführungsformen der vorliegenden Erfindung veranschaulichen.

### Kurze Beschreibung der Zeichnungen

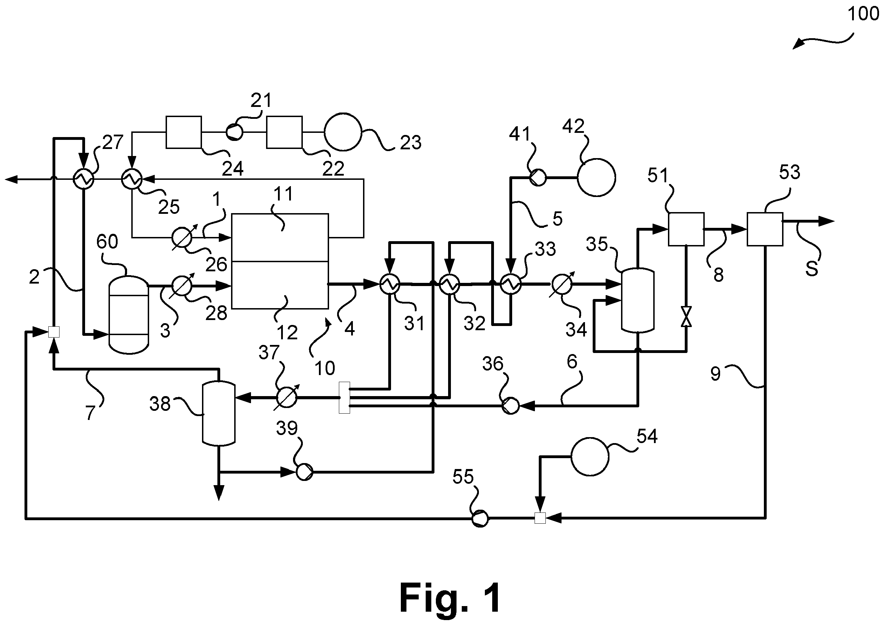

Figur 1 veranschaulicht eine Anlage gemäß einer Ausführungsform der Erfindung in schematischer Darstellung.

### Ausführliche Beschreibung der Zeichnungen

In Figur 1 ist eine Anlage gemäß einer besonders bevorzugten Ausführungsform der Erfindung veranschaulicht und insgesamt mit 100 bezeichnet.

Zentrale Komponente der Anlage 100 ist eine Festoxid- bzw. Hochtemperatur-Elektrolysezelle 10, die eine Anodenseite 11 und eine Kathodenseite 12 bzw. entsprechende anoden- und kathodenseitige Kammern aufweist.

Die Anodenseite 11 der Elektrolysezelle 10 wird mit Luft gespült, wozu mittels eines Verdichters 21 über ein Filter 22 Luft aus einem Luftvolumen 23 bzw. atmosphärische Luft angesaugt, mittels eines Trockners 24 getrocknet, mittels eines Wärmetauschers 25 und einer Heizeinrichtung 26 erwärmt und durch die Anodenseite 11 der Elektrolysezelle 10 geführt wird. Ein auf diese Weise bereitgestellter Luftstrom 1 spült die Anodenseite 11 der Elektrolysezelle 10 und führt dort gebildete Produkte, insbesondere Sauerstoff, ab. Nach seiner Verwendung wird der entsprechend angereicherte Luftstrom in dem Wärmetauscher 25 und einem weiteren Wärmetauscher 27 gekühlt. Der angereicherte Luftstrom 2 kann aus der Anlage 100 ausgeleitet werden.

Kathodenseitig wird ein zumindest Wasserdampf, Kohlendioxid und Wasserstoff umfassender Stoffstrom 3 durch die Elektrolysezelle 10 geführt. Der Stoffstrom 3 wird dabei in einer Heizeinrichtung 28 erwärmt. Der Stoffstrom 3 wird einem zur Durchführung einer Wassergas-Shift-Reaktion eingerichteten Reaktor 60 entnommen, dem seinerseits ein Stoffstrom 2 zugeführt wird. Der Stoffstrom 2 kann insbesondere neben Kohlendioxid nennenswerte Mengen an Kohlenmonoxid enthalten, das in der Wassergas-Shift-Reaktion zu Wasserstoff und Kohlendioxid umgesetzt wird. Kohlendioxid und Kohlenmonoxid stammen dabei aus einem unten erläuterten Stoffstrom 9. Das eingesetzte Wasser wird als Dampfstrom 7 einem unten erläuterten Abscheidebehälter 38 entnommen. Der Stoffstrom 3 weist damit einen deutlich geringeren Gehalt an Kohlenmonoxid auf als der Stoffstrom 2, wohingegen sein Wasserstoffgehalt entsprechend erhöht ist.

Die Kathodenseite der Elektrolysezelle 10 verlässt ein Rohelektrolyseprodukt, welches, wie erläutert, Wasserdampf, Kohlendioxid, Kohlenmonoxid und Wasserstoff umfasst. Dieses wird in Form eines Stoffstroms 4 durch Wärmetauscher 31, 32, 33 geführt und in einer, beispielsweise mit Kühlwasser betriebenen, Kühleinrichtung 34 gekühlt. Die Wärmetauscher 32, 33 werden dabei von einem Wasserstrom 5 durchströmt, der mittels einer Pumpe 41 aus einem Wasservolumen 42 gefördert wird. Bei dem Wärmetauscher 31 handelt es sich um einen Dampferzeuger, der ähnlich ausgebildet sein kann, wie ein Dampferzeuger, der in bekannten Verfahren zur Damfreformierung im Rauchgasstrom eingesetzt wird. In den Wärmetauschern 32 und 33 kann Speisewasser angewärmt werden. Teil des auf diese Weise ausgebildeten Dampferzeugungssystems ist eine Dampftrommel 38. Eine entsprechende Dampferzeugung in einem Dampfreformierungsverfahren ist beispielsweise in der DE 1 255 641 A1 A gezeigt.

Durch die erläuterte Abkühlung des Stoffstroms 4 kann aus diesem in einem Abscheidebehälter 35 Wasser abgeschieden werden, das in Form eines Stoffstroms 6 mittels einer Pumpe 36 abgezogen werden kann. Das Wasser des Stoffstroms 6 kann zusammen mit dem Wasser des Stoffstroms 5 in einer Heizeinrichtung 37 erwärmt werden. Das auf diese Weise zumindest teilweise verdampfende Wasser wird in die Dampftrommel 38 überführt. Dampf vom Kopf der Dampftrommel 38 kann, wie erwähnt, in Form eines Dampfstroms 7 zur Bildung des Stoffstroms 3 verwendet werden.

In der Dampftrommel 38 flüssig vorliegendes Wasser kann in Form eines nicht gesondert bezeichneten Stoffstroms mittels einer Pumpe 39 unter teilweiser Verdampfung durch den Wärmetauscher 31 geführt und erneut der Erwärmung in der Heizeinrichtung 37 zugeführt werden. Weiteres abgeschiedenes Wasser kann in Form eines ebenfalls nicht gesondert bezeichneten Stoffstroms aus der Anlage 100 ausgeführt werden.

Das auf diese Weise bereits weitgehend von Wasser befreite Rohelektrolyseprodukt kann in Form eines nicht gesondert bezeichneten Stoffstroms vom Kopf des Abscheidebehälters 35 abgezogen und mittels eines Rohgasverdichters 51 einer Verdichtung unterworfen werden. Hierbei abgeschiedenes Kondensat kann, wie ebenfalls nicht gesondert mit einem Bezugszeichen angegeben, in den Abscheidebehälter 35 zurückgespeist werden. Das auf diese Weise verdichtete und aufbereitete Elektrolyserohprodukt kann in Form eines Stoffstroms 8 einer Kohlendioxidabtrennung in einer adsorptiv und/oder auf Grundlage eines Membranverfahrens arbeitenden Kohlendioxidabtrennung 53 unterworfen werden.

In der Kohlendioxidabtrennung 53 wird unter Abtrennung einer Fraktion, die Kohlendioxid, aber auch nennenswerte Mengen an Kohlenmonoxid enthält, und die in Form eines Stoffstroms 9 aus der Kohlendioxidabtrenneinheit 53 abgezogen werden kann, ein Gasprodukt gebildet, das zumindest Kohlenmonoxid und Wasserstoff enthält. Das Gasprodukt in Form eines Stoffstroms S ausgeführt.

Der Stoffstrom 9 kann, insbesondere nach Zugabe von weiterem Kohlendioxid aus einem entsprechenden Reservoir 54, insbesondere mittels eines Verdichters 55 zurückgeführt und bei der Bildung des der dem Reaktor 60 zugeführten Gasgemischs bzw. des Stoffstroms 3 verwendet werden.

## Patentansprüche

1. Verfahren (100) zur Herstellung eines zumindest Kohlenmonoxid enthaltenden Gasprodukts (S), bei dem ein zumindest Kohlendioxid, Wasser und Wasserstoff enthaltender Elektrolyseeinsatz gebildet und einer Kathodenseite (12) einer Hochtemperatur-Elektrolysezelle (10) zugeführt wird, und bei dem von der Kathodenseite (12) der Hochtemperatur-Elektrolysezelle (10) ein zumindest Wasser, Kohlendioxid, Kohlenmonoxid und Wasserstoff enthaltendes Elektrolyserohprodukt abgeführt wird, **dadurch gekennzeichnet, dass** aus zumindest einem Teil des Elektrolyserohprodukts oder aus einem unter Verwendung zumindest eines Teils des Elektrolyserohprodukts gebildeten Gasgemisch eine zumindest Kohlenmonoxid enthaltende Fraktion abgetrennt wird, wobei das in der zumindest Kohlenmonoxid enthaltenden Fraktion enthaltene Kohlenmonoxid zumindest teilweise mit Wasser unter Bildung von Wasserstoff einer Wassergas-Shift-Reaktion unterworfen wird, und wobei zumindest ein Teil des in der Wassergas-Shift-Reaktion gebildeten Wasserstoffs bei bei der Bildung des Elektrolyseeinsatzes verwendet wird.

2. Verfahren nach Anspruch 1, bei dem die Wassergas-Shift-Reaktion auf einem Temperaturniveau von 200 bis 700 °C durchgeführt wird.

3. Verfahren nach Anspruch 1 oder 2, bei dem die Wassergas-Shift-Reaktion unter Anwesenheit von Kohlendioxid durchgeführt wird.

4. Verfahren nach Anspruch 3, bei dem die zumindest Kohlenmonoxid enthaltende Fraktion Kohlendioxid enthält, und bei dem das in der der Wassergas-Shift-Reaktion anwesende Kohlendioxid zumindest einen Teil des Kohlendioxids in der zumindest Kohlenmonoxid enthaltenden Fraktion umfasst.

5. Verfahren nach Anspruch 3 oder 4, bei dem das in der Wassergas-Shift-Reaktion anwesende Kohlendioxid verfahrensextern bereitgestelltes Kohlendioxid umfasst und/oder bei dem der Hochtemperatur-Elektrolysezelle (10) verfahrensextern bereitgestelltes Kohlendioxid zugeführt wird.

6. Verfahren nach einem der vorstehenden Ansprüche, bei dem die Abtrennung der zumindest Kohlenmonoxid enthaltenden Fraktion zumindest teilweise mittels einer adsorptiven Trennung oder einer Membrantrennung durchgeführt wird.

7. Verfahren nach einem der vorstehenden Ansprüche, bei dem in der Wassergas-Shift-Reaktion gebildete Reaktionswärme zumindest teilweise zur Vorwärmung wenigstens einer der Hochtemperatur-Elektrolysezelle (10) zugeführten Komponente eingesetzt wird.

8. Verfahren nach Anspruch 7, bei dem die Abkühlung und die Entfernung von Wasser einen Wärmetauscher mit einem zur Bereitstellung von Dampf verwendeten Wasser- oder Dampfstrom umfasst.

9. Verfahren nach einem der vorstehenen Ansprüche, bei dem das unter Verwendung zumindest eines Teils des Elektrolyserohprodukts gebildete und zumindest Kohlenmonoxid und Wasserstoff enthaltende Gasgemisch oder ein hiervon nach der Abtrennung der zumindest Kohlenmonoxid enthaltenden Fraktion verbleibendes Gasgemisch zumindest teilweise als Trenneinsatz einer Membrantrennung unterworfen wird, in der ein gegenüber dem Trenneinsatz an Wasserstoff an- und an Kohlenmonoxid abgereichertes Permeat sowie ein an Wasserstoff ab- und an Kohlenmonoxid angereichertes Rententat gebildet werden, wobei zumindet ein Teil des Permeats oder ein unter Verwendung zumindest eines Teils des Permeats gebildetes Gasgemisch bei der Bildung des Elektrolyseeinsatzes verwendet wird.

10. Verfahren nach Anspruch 9, bei dem die Membrantrennung auf einem Temperaturniveau von weniger als 100 °C betrieben wird, und bei dem der der Membrantrennung zugeführte Trenneinsatz unter Verwendung zumindest eines Teils des Elektrolyserohprodukts gebildet wird, das einer Abkühlung und zumindest teilweisen Entfernung von Wasser unterworfen wird.

11. Verfahren nach Anspruch 10, bei dem eine Membrantrennung verwendet wird, deren Triebkraft überwiegend oder ausschließlich durch ein Partialdruckgefälle über eine oder mehrere in der Membrantrennung eingesetzte Membranen eingestellt wird, wobei das Bilden des der Membrantrennung zugeführten Trenneinsatzes eine Verdichtung auf ein Druckniveau von 1 bis 50 bar umfasst.

12. Verfahren nach Anspruch 10, bei dem eine Membrantrennung verwendet wird, deren Triebkraft überwiegend oder ausschließlich durch ein elektrisches Spannungsgefälle über eine oder mehrere in der Membrantrennung eingesetzte Membranen eingestellt wird, wobei der Trenneinsatz der Membrantrennung auf einem Druckniveau von 1 bis 50 bar zugeführt wird.

13. Verfahren nach einem der Ansprüche 9 bis 12, bei dem das Permeat Kohlenmonoxid enthält, und bei dem zumindest ein Teil des Permeats oder ein unter Verwendung zumindest eines Teils des Permeats gebildetes Gasgemisch als weiterer Trenneinsatz einer weiteren Membrantrennung unterworfen wird.

14. Verfahren nach Anspruch 9, bei dem die Membrantrennung auf einem ersten Temperaturniveau von mehr als 200 °C betrieben wird, wobei die Hochtemperatur-Elektrolysezelle (10) auf dem ersten Temperaturniveau betrieben wird, oder wobei die Hochtemperatur-Elektrolysezelle (10) auf einem zweiten Temperaturniveau oberhalb des ersten Temperaturniveaus betrieben wird und das Elektrolyserohprodukt auf das erste Temperaturniveau abgekühlt wird.

15. Anlage zur Herstellung eines zumindest Kohlenmonoxid enthaltenden Gasprodukts (S), mit einer Hochtemperatur-Elektrolysezelle (10), Mitteln, die dafür eingerichtet sind, einen zumindest Kohlendioxid, Wasser und Wasserstoff enthaltenden Elektrolyseeinsatz zu bilden und einer Kathodenseite (12) einer Hochtemperatur-Elektrolysezelle (10) zuzuführen, und Mitteln, die dafür eingerichtet sind, von der Kathodenseite (12) der Hochtemperatur-Elektrolysezelle ein zumindest Wasser, Kohlendioxid, Kohlenmonoxid und Wasserstoff enthaltendes Elektrolyserohprodukt abzuführen, **dadurch gekennzeichnet, dass** Mittel bereitgestellt sind, die dafür eingerichtet sind, aus zumindest einem Teil des Elektrolyserohprodukts oder aus einem unter Verwendung zumindest eines Teils des Elektrolyserohprodukts gebildeten Gasgemisch eine zumindest Kohlenmonoxid enthaltende Fraktion abzutrennen, dass Mittel bereitgestellt sind, die dafür eingerichtet sind, das in der zumindest Kohlenmonoxid enthaltenden Fraktion enthaltene Kohlenmonoxid zumindest teilweise mit Wasser unter Bildung von Wasserstoff einer Wassergas-Shift-Reaktion zu unterwerfen, und dass Mittel bereitgestellt sind, die dafür eingerichtet sind, zumindest ein Teil des in der Wassergas-Shift-Reaktion gebildeten Wasserstoffs bei der Bildung des Elektrolyseeinsatzes zu verwenden.
